# EUROPEAN PATENT SPECIFICATION

(11) **EP 0 770 446 B1**
(45) Date of publication and mention of the grant of the patent: **09.01.2002**
(21) Application number: 96202953.4
(22) Date of filing: 23.10.1996
(51) Int. Cl.: B23K 11/087

(54) **Resistance butt-welding apparatus, in particular for welding annular objects**
Widerstandsstumpfschweissanlage zum Schweissen von ringförmigen Gegenständen
Appareil de soudage par résistance bout-à-bout, en particulier pour des objets de forme annulaire

(30) Priority: 24.10.1995 NL 1001494
(43) Date of publication of application: 02.05.1997
(73) Proprietor: Fontijne Holland B.V., NL-3133 EE Vlaardingen (NL)
(72) Inventor: van der Linde, Jakob, 3223 JA Hellevoetsluis (NL)
(74) Representative: Smulders, Theodorus A.H.J., Ir.

(56) References cited:
- EP-A- 0 173 854
- DE-A- 2 738 238
- DE-A- 3 148 895

## Description

The invention relates to a resistance butt-welding apparatus, in particular for welding annular objects, which substantially consists of two clamping devices that can be moved towards and away from each other, each consisting of a main frame which is fixed in the operating position and provided with an electrode, and a top frame which is at least tiltable relative to the main frame by means of a driving device and provided with a clamping strip capable of pressing down the product to be welded on the electrode of the main frame, and the main frame of each clamping device being provided with cooperating connecting and guiding means which connect the top frame to the main frame so as to be movable both in direction of translation (F) and, independently thereof, in direction of rotation.

Such a resistance butt-welding apparatus is known from EP-A-0.173.854.

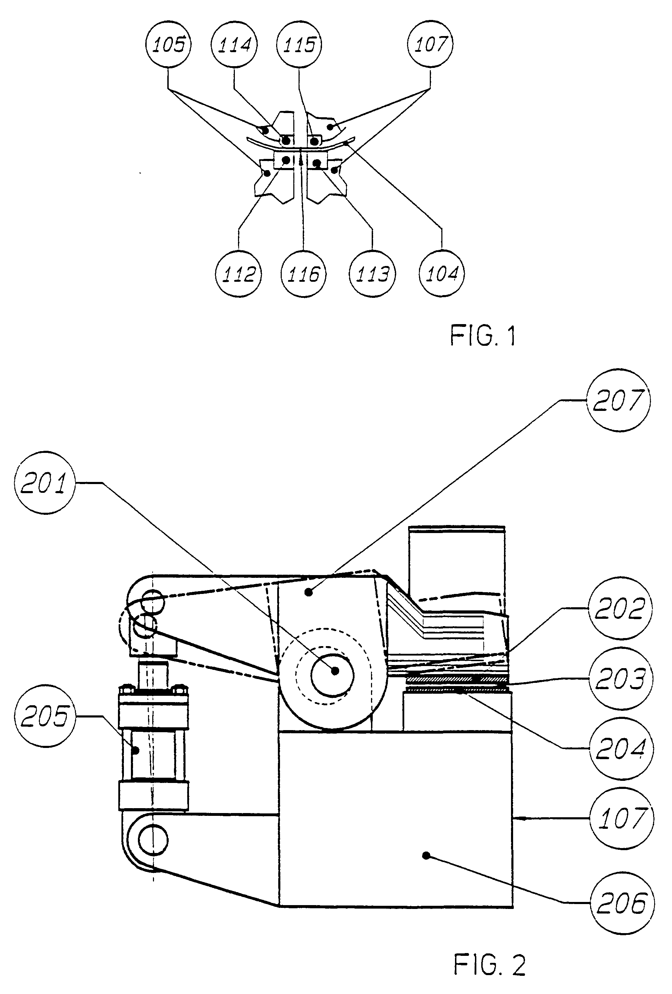

As a welding apparatus for welding annular objects a socalled "alligator-type welding machine is well known from practice. Such welding machine is shown in figs. 1-2.

In Fig. 1, the main parts of such resistance butt-welding apparatus are shown schematically. The clamping devices 105, 107 each consist of a main frame provided with an electrode 112, 113, while the top frame of each clamping device 105, 107'comprises a clamping strip 114, 115. These clamping strips 114, 115 press a product 104 to be welded, in this case a ring bent from a strip, on the electrodes 112, 113. The ends of the ring 104 are pressed together, whereupon a direct current is supplied to the welding area 116 via the electrodes 112, 113. The resulting heat development is greatest at the location of the transfer resistance between the ends of the ring 104 to be connected, and when these parts have been brought into a soft condition, the clamping devices 105, 107 are moved towards each other by means of a butt cylinder to effect the welded joint 116.

In order to obtain a proper weld, it is important that the clamping strips 114, 115 cause the ends of the ring 104 to bed down on the electrodes 112, 113 at an even clamping pressure. In the case of an irregular distribution of clamping pressure in the longitudinal direction of the weld 116, a greater heat development will be created at the location of a higher clamping pressure, which leads to a poor welding result and may for instance cause tearing. An uneven distribution of clamping power may also result in an uneven exertion of the upsetting force on the ends to be connected, because this upsetting force should be produced through friction between the strip, the clamping strips and the electrodes.

Further, it is important that the top faces of the electrodes 112, 113 be in the same horizontal plane.

Fig. 2 shows the clamping device 107 in side elevation. The top frame 207 is tiltably connected, by means of an eccentric shaft 201, to the main frame 206. The tilting movement is effected by a hydraulic clamping cylinder 205, which presses the clamping strip 202 connected to the top frame 207 against an end 203 of the ring to be welded, which end rests on the electrode 204 of the main frame 206. This known resistance butt-welding apparatus is typically referred to as an apparatus of the "alligator" type.

The setting of this known apparatus to obtain a regular distribution of clamping pressure is troublesome. For this purpose, a piece of paper is typically used, lying between the clamping strip 202 and the end of the ring 203 to be welded. The imprint of the clamping strip 202 on the clamped piece of paper gives an impression of the distribution of clamping pressure in the longitudinal direction of the shaft. In the case of irregular distribution of clamping pressure, the eccentric shaft 201 should be adjusted in order to obtain a more regular distribution of clamping pressure. By making a number of test welds, the heat picture of the weld can be judged and, if necessary, the setting can be further optimized. This adjustment of the distribution of clamping pressure usually requires a setting time of about 10 minutes.

It is understood that a distribution of clamping pressure thus obtained is only correct for a given thickness of the ring 203 to be welded, and that when this thickness is changed, the distribution of clamping pressure is to be reset in the manner described hereinabove. This is also the case if the electrode 204 or the clamping strip 202 has been reworked, for instance as a result of damage or wear, and has consequently acquired a different thickness.

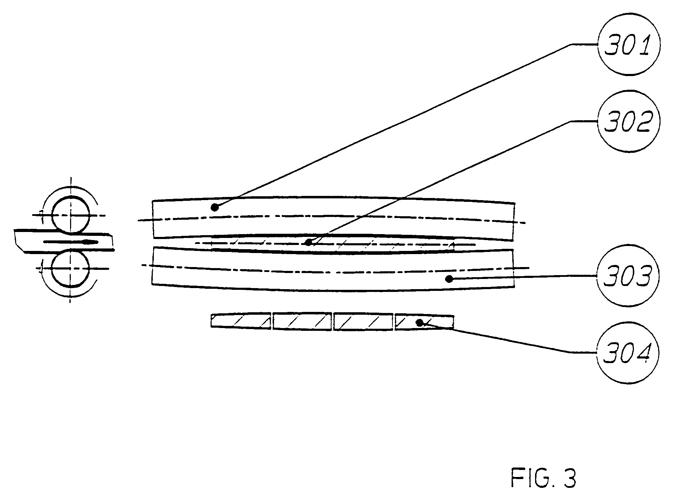

A further complicating factor is the fact that, typically, the ring 203 to be welded does not everywhere have the same thickness in the longitudinal direction of the weld, but exhibits a certain taper, caused by the manufacturing process for the strips shown in Fig. 3, from which strips the annular product to be welded is manufactured. Fig. 3 shows a rolling apparatus for wide-strip material 302, consisting of a top roller 301 and a bottom roller 303. Through deformation of the rollers 301, 303, the wide-strip material 302 acquires a convex surface. From the wide-strip material, for instance four strips 304 are cut, from which strips the rings to be welded are manufactured. As appears from Fig. 3, the shape, and in particular the taper of this ring, depends on the position occupied by this ring in the wide-strip material 302. A change of the taper of the annular product to be welded necessitates another change of the setting of the top frame 207 relative to the main frame 206.

A change of the electrode height of the left clamping device 105 and the right clamping device 107 does not only necessitate setting of the distribution of clamping pressure as described hereinabove, but also the following adjustments:
- If, after having been damaged, the electrodes 112 and 113 are milled off to a different extent, they should be brought to the same height again. In the known welding apparatus shown in Fig. 2, this is effected by resetting one electrode in height by means of fillers of different thicknesses.
- The feed of products to be welded to the welding apparatus takes place by means of a mechanical loading apparatus, while the welded product is removed from the welding apparatus by a mechanical unloading apparatus. A change of the thickness of the two electrodes means that the top face of the electrodes undergoes a change relative to the floor level, as a result of which the mechanical loading apparatus has to present the product to be welded to the welding apparatus at a lower level, while the unloading apparatus has to pick up the welded product at a lower level. In this known apparatus, this is realized by adjusting both the loading and the unloading apparatus mechanically, which in practice takes 3 and 10 minutes respectively. Adjustment of the loading and unloading apparatus should not only be carried out after the electrodes have been reworked, but also when the production line is to be set for a different product thickness.
   In above-mentioned EP-A-0.173.854 it is proposed - in order to solve the uneven distribution of the clamping pressure - to separate the movement of the tiltable top frame into
- a tilting movement in order to transfer the top frame from a position outside of the annular object into the position inside of said object and
- a vertical movement in which the clamping strip of the top frame is moved parallel to itself in the downward direction.

This solution will function well if the products to be welded - i.e. ringshaped products to be used as rims in motorcars - have the same thickness in the longitudinal direction of the weld, which is very often not the case.

There is no possibility to adapt the position of the clamping strip in dependence of the tapered shape of the product to be welded since the top frame is not free to rotate when being pulled downwardly.

The object of the invention is to provide a resistance butt-welding apparatus of the above-described type, wherein the setting operations are minimized.

In accordance with the invention, this object is realized in that the connecting and guiding means comprise three shaft journals, provided on a side face of the top frame and approximately lying on the angular points of a right-angled triangle, while in the intercoupled position of the main frame and the top frame the top journal of the top frame is received almost without play in a top longitudinal slot of the main frame, the shaft journal located therebelow is received with ample lateral play in a bottom longitudinal slot of the main frame, while the shaft journal located at the side is supported in a link whose top end encloses a shaft journal eccentrically arranged on a shaft bearing-mounted below the welding electrode in the main frame.

By dividing the movement of the top frame relative to the main frame into independent directions of translation and rotation, the clamping strip connected to the top frame, after this clamping strip has contacted the product to be welded, can be bedded down on the top face of the product to be welded with an even distribution of clamping pressure, through a tilting movement of the top frame relative to the main frame. The clamping strip is, as it were, "seekingly" contacted with the product to be welded, regardless of the sectional shape of the product to be welded at that location. Hence, an automatic adaptation to the thickness or taper of the product to be welded on the welding area takes place.

Further elaborated embodiments of the butt-welding apparatus according to the invention are described in the subclaims.

In accordance with a preferably applied embodiment of the apparatus according to the invention, the main frame rests on a base frame by means of a height-adjustable support, while between this base frame and the top frame, a position sensor is provided, issuing an electric signal which is a measure for the height of the top frame relative to the base frame and forms a control signal for adjusting the support of the main frame so that the top frame connected to the main frame is located at a desired fixed height.

In this manner, it is provided that a change of the thickness of the product to be welded or a change of the top face of the electrodes does not necessitate re-adjustment of the loading or unloading apparatus cooperating with the resistance butt-welding apparatus according to the inveNtion. Instead of an adjustment of the swivelling arms of the loading or unloading apparatus, a height adjustment of the clamping devices takes place so that the top face of the product to be welded is always set at a fixed height relative to the bottom and hence has a proper height relative to the loading or unloading apparatus.

Hereinafter, embodiments of the apparatus according to the invention will be specified with reference to the accompanying drawings, wherein:
Fig. 1 is a schematic representation of some main parts of a resistance butt-welding apparatus;
Fig. 2 shows a clamping device of a butt-welding apparatus known from practice;
Fig. 3 is a schematic representation of a rolling apparatus for manufacturing wide-strip material, from which, in section, differently shaped strips are cut, from which strips the products to be welded are manufactured, which products have been bent into a ring;
Fig. 4 is a schematic representation of a clamping device according to the invention;
Fig. 5 schematically shows the mutual positions of the top frame and the main frame according to Fig. 4 when clamping products of different sectional shapes to be welded;
Fig. 6 is a schematic representation of the height-adjustment of the device according to Fig. 4 when changing the product thickness;
Fig. 7 is a schematic representation in accordance with Fig. 6, representing the height-adjustment after the electrode thickness has undergone a change; and
Fig. 8 is a schematic representation, in front and side view, of the resistance butt-welding apparatus according to the invention.

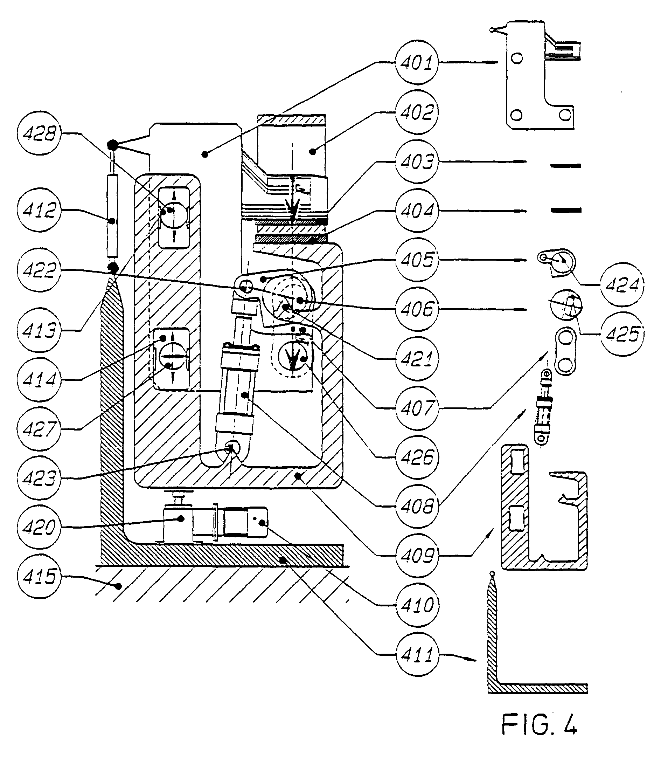

Figs. 1-3 have already been specified hereinabove. Fig. 4 schematically shows a clamping device 107 (see Fig. 1) in side elevation. The resistance butt-welding apparatus comprises two such clamping devices, arranged opposite each other.

The clamping device 107 comprises a base frame 411 resting on a foundation 415. The main frame 409 rests on the base frame 411 via a height-adjustable support 420 whose height is settable by means of an adjusting motor 410. The main frame 409 is of a substantially U-shaped construction. Provided in the left leg of this U-form are two guiding slots 413, 414, extending one above the other in vertical direction. Located on top of the right leg of the U-shaped main frame 409 is the electrode 404. Below the electrode 404, a supporting point 421 is present for a lever 405, 406, which will be further specified hereinbelow. In the bottom connecting leg of the U-shaped main frame 409, a shaft 423 is bearing-mounted, to which shaft the bottom end of a hydraulic cylinder 408 is connected. The top end of the hydraulic cylinder 408 is connected to a shaft 422 forming part of the lever 405. The lever 405 is of a substantially annular construction and is provided with a circular recess 424 which constitutes a bearing point for a shaft 406 bearing-mounted in the main frame 409. By means of a key (not shown), the lever 405 and the shaft 406 are interconnected so as to be fixed in direction of rotation. The center line of the shaft 406 constitutes the supporting point 421 of the lever 405. Provided on the shaft 406 is an eccentrically arranged shaft journal 425, projecting from the side face of the lever 405. The top end of a link 407 can be slid onto the shaft journal 425, while the bottom end of that link 407 encloses a shaft journal 426 provided on a side face of the top frame 401, approximately in the center plane of the electrode 404. Hence, the top frame 401 is suspended from the main frame 409 by means of the link 407.

The top frame 401 is of a substantially C-shaped construction, with a clamping strip 403 mounted on the horizontally extending top leg of the top frame 401. The top frame 401 has a side face provided with three shaft journals 426, 427 and 428, which project from that side face and approximately lie on the angular points of a right-angled triangle. The shaft journals 428, 427 lying on the angular points of the vertical leg of that triangle project into the vertically extending guiding slots 413, 414, with the shaft journal 428 abutting without play against the two vertically extending guiding faces of the slot 413, while the shaft journal 427 is received with a certain play in the guiding slot 414, permitting the shaft journal 427 to move both in vertical and in horizontal direction within the slot 414.

Between the top end of the base frame 411 and a projection of the top frame 401, a position sensor is provided. This sensor can supply an electric signal which constitutes a measure for the height of the top frame 401 relative to the base frame 411. By means of this position sensor 412, for instance the exact height of the bottom face of the clamping strip 403 relative to the top face of the foundation 415 can be measured. An electric signal issued by the position sensor 412 can be used as a control signal for the electric driving mechanism 410 of the height-adjustable support 420 in order to set the main frame 409, and accordingly the top frame 401, at a desired height.

The operation of the clamping device according to Fig. 4 is as follows:

If the plunger of the adjusting cylinder 408 is driven out of the cylinder, the lever 405 will tilt about the supporting point 421, whereby the eccentrically arranged shaft journal 425 of the shaft 406 is forced in downward direction. Via the link 407, this downward movement will be transferred to the shaft journal 426 of the top frame 401, whereby the clamping strip 403 of the top frame 401 will bed down in any manner on the top face of the product 402 to be welded. The cooperating guiding means, viz. the shaft journal 428 and the guiding slot 413, provide a truly vertical guidance of the top frame 401 relative to the main frame 409. If the clamping strip 403 comes to bed down on the surface to be welded of the ring 402 at one point only, a continued downward displacement of the top frame 401 will involve a certain tilting movement of the top frame 401, which tilting movement is allowed by the lateral space between the shaft journal 427 of the top frame 401 and the sidewalls of the vertical slot 414 in the top frame 409. This tilting movement of the top frame causes the clamping force F (see the arrow in Fig. 4) to be regularly distributed over the surface of the clamping strip 403, regardless of the possibly tapered configuration of the top face of the clamped product 402 to be welded.

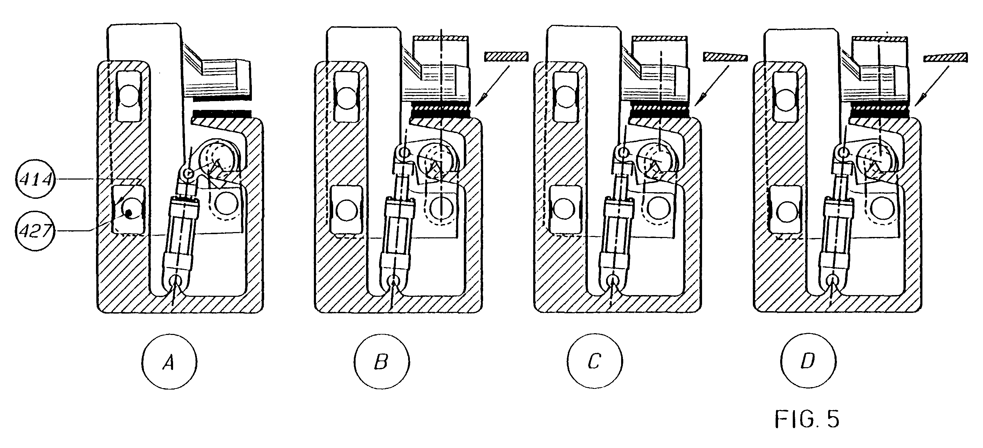

Figs. 5a-d show different positions of the top frame 401 relative to the main frame 409. In Fig. 5a, the welding apparatus is in the open position, ready to be loaded with a product to be welded. The shaft journal 427 of the top frame 401 abuts against the right wall of the guiding slot 414 and the hydraulic cylinder 408 is in the retracted position.

In Fig. 5b, a product to be welded, having a truly rectangular section, is clamped between the electrode 404 and the clamping strip 403. The shaft journal 427 of the top frame will be located approximately at the center of the guiding slot 414.

In Fig. 5c, a product to be welded and whose section decreases towards the right is clamped between the clamping strip 403 and the electrode 404. The top frame 401 is tilted relative to the main frame 409 so that the shaft journal 427 has come to lie adjacent the left sidewall of the guiding slot 414.

Fig. 5d shows the position of the different parts in the case of a clamped product whose section increases towards the right.

### Height-adjustment

For the sake of the loading and unloading apparatus, it is desired that when a product is clamped, the bottom face of the clamping strip 403 be located at a fixed height above the floor 415, for instance at a height of 1150 mm. When the adjusting cylinder 408 is telescoped-out maximally, the bottom face of the clamping strip 403 will be located some millimeters above this level, for instance at 1167 mm.

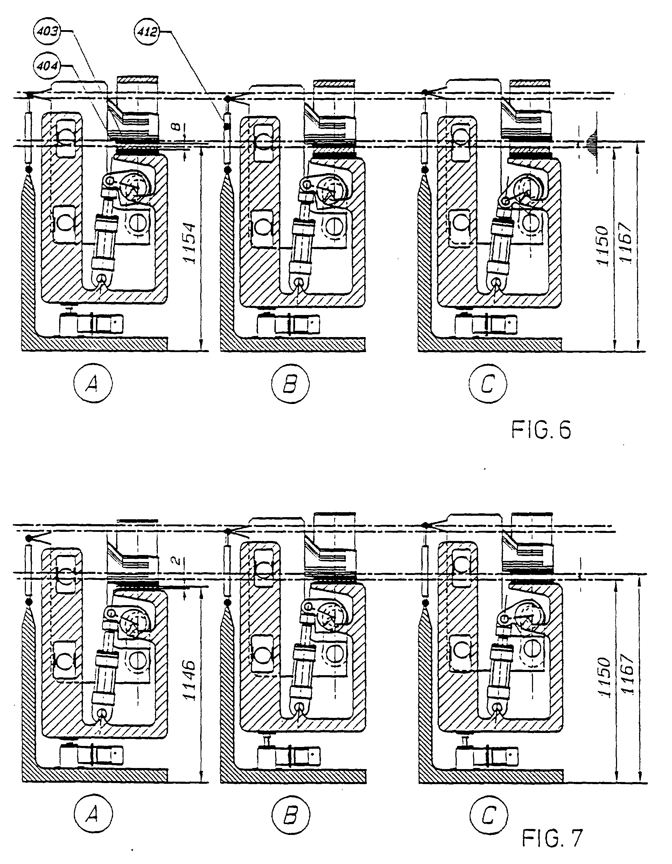

If the welding apparatus was adjusted to a product to be welded having a thickness of 4 mm and the apparatus should be re-set to a strip thickness of 8 mm, the bottom face of the clamping strip 403 is located, in the case of a clamped strip, at a level of 1154 mm above the top face of the foundation 415, i.e. 4 mm above the desired level of 1150 mm. This height difference is measured by the position sensor, and subsequently a control signal is transmitted to the height-adjusting motor 410, which will move the main frame 409 in downward direction until this main frame 409, and accordingly the top frame 401 connected thereto, has lowered by 4 mm. The welding apparatus has now been set at the desired level again, adaped to the working height of the loading and unloading apparatus. When the clamp is opened, the bottom face of the clamping strip 403 will be moved again to the fixed level - 1167 mm - by means of the adjusting cylinder 408 (see Fig. 6c).

The height-adjustment of the clamping device takes place in the same manner if not only the thickness of the product is changed, but also the electrodes have been milled off, for instance, 2 mm.

In Fig. 7a, the product of Fig. 6 having a thickness of 8 mm has been replaced by a strip having a thickness of 2 mm, while the electrodes 404 have been milled off 2 mm. The strip of 2 mm is clamped between the electrode and the clamping strip. Accordingly, the bottom face of the clamping strip will lie at a height of 1146 mm above the foundation surface. The position sensor 412 measures this difference relative to the desired level of 1150 mm and transmits a control signal to the motor 410 for adjusting the height of the support 420 of the base frame 409. This situation is shown in Fig. 7b, while in Fig. 7c the top frame 401 is placed in the open condition, with the bottom face of the clamping strip 403 lying at 1167 mm above the foundation level again.

The height-adjustment of the clamping devices takes place independently for the two clamping devices, so that in the case where the electrodes of the two units have different thicknesses, both height-adjustments can be performed simultaneously within a period of about 30 seconds. Because, in this manner, the bottom face of the clamping strip of a clamping device is always set at a fixed value, in this case 1150 mm, no adjustment needs to take place anymore of the loading and unloading apparatus of the welding machine.

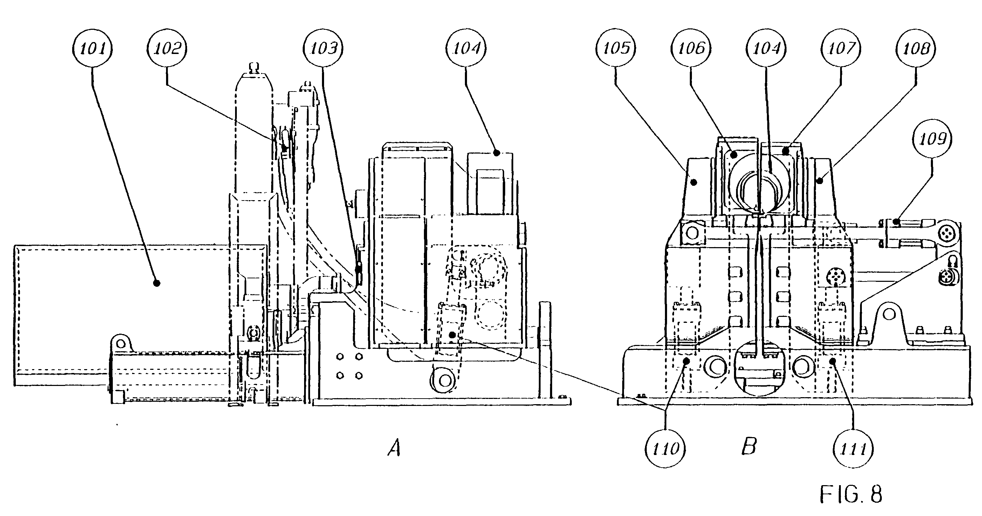

Figs. 8a-b schematically show a side elevation and a front view respectively of the resistance butt-welding apparatus according to the invention. The apparatus comprises a transformer-rectifier unit 101 for generating the welding current. The apparatus further comprises a block 102 having hydraulic components for the different hydraulic parts of the apparatus. The position sensor 103 is shown while the product 104 to be welded is drawn on the righthand side of Fig. 8a. Fig. 8b shows the left clamping device 105 and the right clamping device 107, each comprising a C-shaped top frame 106, 108 respectively. Each clamping device 105, 107 comprises a clamping cylinder 110, 111 respectively. The apparatus further comprises a butt cylinder 109 for moving the two clamping devices 105, 107 towards and away from each other.

## Claims

1. A resistance butt-welding apparatus, in particular for welding annular objects (402), which substantially consists of two clamping devices (105, 107) that can be moved towards and away from each other, each consisting of a main frame (409) which is fixed in the operating position and provided with an electrode (404), and a top frame (401) which is at least tiltable relative to the main frame (409) by means of a driving device (408) and provided with a clamping strip (403) capable of pressing down the product (402) to be welded on the electrode (404) of the main frame (409), the top frame (401) and the main frame (409) of each clamping device (105, 107) being provided with cooperating connecting (408, 405, 406, 407, 426) and guiding means (413, 414, 427, 428) which connect the top frame (401) to the main frame (409) so as to be movable both in direction of translation (F) and, independently thereof, in direction of rotation, **characterized in that** the connecting and guiding means comprise three shaft journals (426, 427, 428), provided on a side face of the top frame (401) and approximately lying on the angular points of a right-angled triangle, while in the intercoupled position of the main frame (409) and the top frame (401) the top journal (428) of the top frame (401) is received almost without play in a top longitudinal slot (413) of the main frame (409), the shaft journal (427) located therebelow is received with ample lateral play in a bottom longitudinal slot (414) of the main frame (409), while the shaft journal (426) located at the side is supported in a link (107) whose top end encloses a shaft journal (425) eccentrically arranged on a shaft (406) bearing-mounted below the welding electrode (404) in the main frame (409).

2. An apparatus according to claim 1, **characterized in that** the main frame (409) is of a substantially U-shaped construction, the welding electrode (404) being provided on the top end of one leg of the U-shaped frame (409), while in the other leg, the two longitudinal slots (413, 414), are arranged one below the other.

3. An apparatus according to claim 1, **characterized in that** the top frame (401) is of a substantially C-shaped construction, the clamping strip (403) being provided on the bottom side of the top leg of the C-shaped frame (401), said top leg extending approximately horizontally.

4. An apparatus according to any one of claims 1-3, **characterized in that** the driving device for displacing the top frame (401) in direction of translation and rotation relative to the main frame (409) comprises a hydraulic adjusting cylinder (408) whose bottom end is hingedly connected to a shaft (423) supported in the main frame (409) and whose top end engages an arm of a lever (405) which is tiltable about the center line of the shaft (406) bearing-mounted in the main frame (409) and fixedly connected to said shaft (406) in direction of rotation.

5. An apparatus according to any one of claims 1-4, **characterized in that** the main frame (409) rests on a base frame (411) by means of a height-adjustable support (420), while between said base frame (411) and the top frame (401), a position sensor (412) is provided, issuing an electric signal which is a measure for the height of the top frame (401) relative to the base frame (411) and forms a control signal for adjusting the support (420) of the main frame (409) so that the top frame (401) connected to the main frame (409) is brought to a desired fixed height.

## Patentansprüche

1. Widerstandsstumpfschweißvorrichtung, insbesondere zum Schweißen ringförmiger Gegenstände (402), die im wesentlichen aus zwei Klemmvorrichtungen (105, 107) besteht, die aufeinander zu und voneinander weg bewegbar sind, wobei jede aus einem Hauptrahmen (409), der in der Betriebsposition festgelegt und mit einer Elektrode (404) versehen ist, und einem oberen Rahmen (401) besteht, der wenigsten in bezug zum Hauptrahmen (409) mittels einerAntriebsvorrichtung (408) kippbar und mit einem Klemmstreifen (403) versehen ist, das in der Lage ist, das zu schweißende Produkt (402) auf die Elektrode (404) des Hauptrahmens (409) zu drücken, wobei der obere Rahmen (401) und der Hauptrahmen (409) jeder Klemmvorrichtung (105, 107) mit zusammenwirkenden Verbindungs- (408, 405, 406, 407, 426) und Führungseinrichtungen (413, 414, 427, 428) versehen sind, welche den oberen Rahmen (401) mit dem Hauptrahmen (409) derart verbinden, daß dieser in Translationsrichtung (F) und, unabhängig davon, in Drehrichtung bewegbar ist, **dadurch gekennzeichnet, daß** die Verbindungs- und Führungseinrichtungen drei Wellenzapfen (426, 427, 428) aufweisen, die an einer Seitenfläche des oberen Rahmens (401) vorgesehen sind und ungefähr auf den Winkelpunkten eines rechtwinkligen Dreiecks liegen, wobei in der verbundenen Position des Hauptrahmens (409) und des oberen Rahmens (401) der obere Zapfen (428) des oberen Rahmens (401) beinahe ohne Spiel in einem Längsschlitz (413) des Hauptrahmens (409) aufgenommen ist, wobei der darunter befindliche Wellenzapfen (427) mit großem seitlichem Spiel in einem unteren Längsschlitz (414) des Hauptrahmens (409) aufgenommen ist, während der an der Seite angeordnete Wellenzapfen (426) in einem Verbindungsteil (407) abgestützt ist, dessen oberes Ende einen exzentrisch auf einer Welle (406) angeordneten Wellenzapfen (425) umgibt, die in dem Hauptrahmen (409) unter der Schweißelektrode (404) gelagert ist.

2. Vorrichtung nach Anspruch 1, **dadurch gekennzeichnet, daß** der Hauptrahmen (409) im wesentlichen U-förmig aufgebaut ist, wobei die Schweißelektrode (404) am oberen Ende eines Schenkels des U-förmigen Rahmens (409) vorgesehen ist, während in dem anderen Schenkel die beiden Längsschlitze (413, 414) untereinander angeordnet sind.

3. Vorrichtung nach Anspruch 1, **dadurch gekennzeichnet, daß** der obere Rahmen (401) im wesentlichen C-förmig aufgebaut ist, wobei der Klemmstreifen (403) an der Unterseite des oberen Schenkels des C-förmigen Rahmens (401) angeordnet ist, wobei sich der obere Schenkel im wesentlichen horizontal erstreckt.

4. Vorrichtung nach einem Ansprüche 1-3, **dadurch gekennzeichnet, daß** die Antriebsvorrichtung zum Bewegen des oberen Rahmens (401) in Translations- und Rotationsrichtung relativ zum Hauptrahmen (409) einen hydraulischen Einstellzylinder (408) aufweist, dessen unteres Ende gelenkig mit einer Welle (423) verbunden ist, die am Hauptrahmen (409) abgestützt ist, und deren oberes Ende an einem Arm eines Hebels (405) angreift, der um die Mittellinie der im Hauptrahmen (409) gelagerten Welle (406) schwenkbar und in Drehrichtung fest mit der Welle (406) verbunden ist.

5. Vorrichtung nach einem Ansprüche 1-4, **dadurch gekennzeichnet, daß** der Hauptrahmen (409) auf einem Basisrahmen (411) mittels einer höhenverstellbaren Stützeinrichtung (420) aufliegt, wobei zwischen dem Basisrahmen (411) und dem oberen Rahmen (401) ein Positionssensor (412) vorgesehen ist, der ein elektrisches Signal ausgibt, daß ein Messung der Höhe des oberen Rahmens (401) in bezug auf den Basisrahmen (411) wiedergibt und ein Steuersignal zum Einstellen der Stützeinrichtung (420) des Hauptrahmens (409) bildet, so daß der mit dem Hauptrahmen (409) verbundene obere Rahmen (401) auf eine gewünschte feste Höhe gebracht wird.

## Revendications

1. Appareil à résistance pour le soudage bout à bout, en particulier pour le soudage d'objets annulaires (402), qui comprend essentiellement deux dispositifs de serrage (105,107) que l'on peut déplacer en rapprochement et en éloignement l'un de l'autre, chacun étant constitué par un cadre principal (409) qui est fixé dans la position de fonctionnement et pourvu d'une électrode (404), et par un cadre supérieur (401) qui est au moins susceptible de basculer par rapport au cadre principal (409) au moyen d'un dispositif d'entraînement (408), et pourvu d'un ruban de serrage (403) capable de presser vers le bas le produit (402) à souder sur l'électrode (404) du cadre principal (409), le cadre supérieur (401) et le cadre principal (409) de chaque dispositif de serrage (105, 107) étant pourvus de moyens coopérants de connexion (408,405, 406, 407, 426) et de guidage (413, 414, 427, 428) qui connectent le cadre supérieur (401) au cadre principal (409) de façon à être mobiles à la fois en direction de translation (F) et, indépendamment de cela, en direction de rotation,
**caractérisé en ce que** les moyens de connexion et de guidage comprennent trois pivots d'arbre (426, 427, 428), prévus sur une face latérale du cadre supérieur (401) et situés approximativement sur les points angulaires d'un triangle à angle droit, tandis que dans la position de couplage mutuel du cadre principal (409) et du cadre supérieur (401) le pivot supérieur (428) du cadre supérieur (401) est reçu pratiquement sans jeu dans une fente longitudinale supérieure (413) du cadre principal (409), le pivot d'arbre (427) situé au-dessous est reçu avec un ample jeu latéral dans une fente longitudinale inférieure (414) du cadre principal (409), tandis que le pivot d'arbre (426) situé au niveau du côté est supporté dans un bras (107) dont l'extrémité supérieure enferme un pivot d'arbre (425) agencé excentriquement sur un arbre (406) monté sur des paliers au-dessous de l'électrode de soudage (404) dans le cadre principal (409).

2. Appareil selon la revendication 1, **caractérisé en ce que** le cadre principal (409) a une construction sensiblement en forme de U, l'électrode de soudage (404) étant prévue sur l'extrémité supérieure d'un jambage du cadre en forme de U (409), tandis que dans l'autre jambage, les deux fentes longitudinales (413, 414) sont agencées l'une au-dessous de l'autre.

3. Appareil selon la revendication 1, **caractérisé en ce que** le cadre supérieur (401) a une construction sensiblement en forme de C, le ruban de serrage (403) étant prévu sur le côté inférieur du jambage supérieur du cadre en forme de C (401), ledit jambage supérieur s'étendant approximativement horizontalement.

4. Appareil selon l'une quelconque des revendications 1 à 3, **caractérisé en ce que** le dispositif d'entraînement pour déplacer le cadre supérieur (401) en direction de translation et de rotation par rapport au cadre principal (409) comprend un cylindre d'ajustement hydraulique (408) dont l'extrémité inférieure est connectée de façon articulée à un arbre (423) supporté sur le cadre principal (409), et dont l'extrémité supérieure engage un bras d'un levier (405) qui est capable de pivoter autour de l'axe de l'arbre (406) monté par des paliers dans le cadre principal (409) et connecté de manière fixe audit arbre (406) en direction de rotation.

5. Appareil selon l'une quelconque des revendications 1 à 4, **caractérisé en ce que** le cadre principal (409) repose sur un cadre de base (411) au moyen d'un support (420) ajustable en hauteur, tandis qu'il est prévu entre ledit cadre de base (411) et le cadre supérieur (401) un détecteur de position (412) qui délivre un signal électrique représentant une mesure pour la hauteur du cadre supérieur (401) par rapport au cadre de base (411) et qui forme un signal de commande pour ajuster le support (420) du cadre principal (409) de sorte que le cadre supérieur (401) connecté au cadre principal (409) est amené à une hauteur fixe désirée.
